# EUROPÄISCHE PATENTSCHRIFT

(11) **EP 3 625 063 B1**
(45) Veröffentlichungstag und Bekanntmachung des Hinweises auf die Patenterteilung: **12.05.2021**
(21) Anmeldenummer: 18709512.0
(22) Anmeldetag: 01.03.2018
(51) Int. Cl.: B60C 11/16, B60C 11/11

(54) **FAHRZEUGLUFTREIFEN**
PNEUMATIC VEHICLE TYRE
PNEUMATIQUE DE VÉHICULE

(30) Priorität: 18.05.2017 DE 102017208416
(43) Veröffentlichungstag der Anmeldung: 25.03.2020
(73) Patentinhaber: Continental Reifen Deutschland GmbH, 30165 Hannover (DE)
(72) Erfinder: SPECHTMEYER, Torben, 30451 Hannover (DE); KÖTTER, Maik, 30451 Hannover (DE); SCHLITTENHARD, Jan, 30900 Wedemark (DE)
(74) Vertreter: Continental Corporation
(86) Internationale Anmeldenummer: PCT/EP2018/055006
(87) Internationale Veröffentlichungsnummer: WO 2018/210460

(56) Entgegenhaltungen:
- EP-A1- 0 875 404
- WO-A1-2016/080454
- DE-A1- 1 480 991
- DE-U- 1 850 309
- FI-B- 126 308
- JP-A- 2008 284 922
- JP-A- 2013 067 192

## Beschreibung

Die Erfindung betrifft einen Fahrzeugluftreifen mit einem profilierten Laufstreifen mit Spikes, welche in über den Umfang des Laufstreifens umlaufenden Spikespuren angeordnet sind, wobei jeder Spike einen im Gummimaterial des Laufstreifens verankerten Spikekörper und einen über die Laufstreifenperipherie vorstehenden Spikepin aufweist, wobei im Laufstreifen Spikes eines ersten Typs und Spikes eines zweiten Typs verankert sind, welche sich in der Ausgestaltung ihrer Spikepins voneinander unterscheiden, wobei die Spikes des ersten Typs eine bessere Seitenkraftübertragung bewirken als die Spikes des zweiten Typs, welche eine bessere Brems- und Traktionskraftübertragung bewirken als die Spikes des ersten Typs.

Ein Fahrzeugluftreifen der eingangs genannten Art ist aus der FI 126308 B bekannt. Bei einer bevorzugten Ausführung umfasst der Laufstreifen über die Laufstreifenbreite einen mittleren Umfangsbereich und zwei schulterseitige Umfangsbereiche, wobei im mittleren Umfangsbereich Spikes mit Spikepins verankert sind, welche eine bessere Brems- und Traktionskraftübertragung bewirken als jene Spikes, welche in den beiden schulterseitigen Umfangsbereichen verankert sind. Die in ihren Eigenschaften unterschiedlichen Spikes unterscheiden sich hinsichtlich des Querschnittes ihrer Spikespins, wobei die im mittleren Umfangsbereich verankerten Spikes Spikepins mit einer kleineren Querschnittsfläche aufweisen, als die Spikes in den schulterseitigen Umfangsbereichen. Insbesondere sind die in den schulterseitigen Umfangsbereichen verankerten Spikes mit Spikepins versehen, die im Querschnitt kantig ausgeführt sind, beispielswiese quadratisch, sternförmig, rautenförmig und dergleichen. Ein gemäß der FI 126308 B ausgeführter Winterreifen weist in den die Übertragung von Seitenkräften vorrangig wichtigen seitlichen Umfangsbereichen des Laufstreifens Spikes mit Spikepins auf, die Seitenkräfte gut übertragen können, im mittleren Umfangsbereich hingegen Spikes mit Spikepins, die Traktions- und Bremskräfte besser übertragen können als jene in den beiden seitlichen Umfangsbereichen.

Aus der WO 2016 080 454 A1 ist ein Fahrzeugluftreifen bekannt, welcher einen Laufstreifen mit in Spikespuren angeordneten Spikes aufweist. Die Spikes setzen sich aus einem Spikekörper und einem Spikepin mit einem aus dem Spikekörper herausragenden, im Querschnitt langgestreckt rechteckigen Pinabschnitt zusammen. Die Spikes sind derart am Laufstreifen orientiert, dass die rechteckigen Pinabschnitte - bezogen auf ihre Längserstreckung - unter einem Winkel von 10° bis 60° zur axialen Richtung orientiert sind, wodurch dem Reifen gute Bremseigenschaften verliehen und eine gute Übertragung von Seitenführungskräften des Reifens auf den Untergrund ermöglicht sein sollen.

Die JP 2008 284 922 offenbart einen weiteren Fahrzeugluftreifen mit einem Laufstreifen mit in Spikespuren angeordneten Spikes, welche einen aus dem Spikekörper herausragenden, im Querschnitt langgestreckt rechteckigen Pinabschnitt aufweisen. Am Laufstreifen sind sowohl Spikes mit in Umfangsrichtung ausgerichteten Pinabschnitten, als auch Spikes mit in axialer Richtung ausgerichteten Pinabschnitten vorgesehen.

Aus der DE 14 80 991 A1 ist ebenfalls ein Fahrzeugluftreifen mit einem Laufstreifen mit in Spikespuren angeordneten Spikes bekannt. Die Abstände der innerhalb einer Spikespur befindlichen Spikes nimmt von Spikespur zu Spikespur über die Laufstreifenbreite zu. Dies soll sich günstig auf die Eisgriffeigenschaften bei Kurvenfahrt auswirken.

Die EP 0 875 404 A1 offenbart einen beispielsweise für Fahrzugluftreifen oder für Schuhsohlen vorgesehenen Spike mit einem Spikefuß und einem Spikepin. Der Spikepin ist aus einem Material, dessen Härte temperaturabhängig ist, gefertigt. Der Spikefuß besteht aus einem Isolationsmaterial, welches einen Wärmefluss vom Gummimaterial, welches den Spikefuß umgibt, zum Spikepin verhindern und derart ein Herausbrechen des Spikepins aus dem Spikefuß unter Belastung verhindern soll. Am Laufstreifen eines Fahrzeugluftreifens sind beispielsweise zwei Spikespuren mit solchen Spikes vorgesehen.

Aus der DE 18 50 309 U ist ein Spike mit einem im Querschnitt ovalen Spikekörper mit zwei nebeneinander verankerten Spikepins bekannt. Diese Spikes sollen sich für Reifen eignen, die für schwere Fahrzeuge vorgesehen sind.

Die JP 2013 067 192 A offenbart einen Fahrzeugluftreifen mit einem Laufstreifen mit Spikes, die einen im Querschnitt quadratischen Spikepin aufweisen. Die Spikes sind derart in den Laufstreifen eingesetzt, dass die vier in Draufsicht am äußeren Umfang des Spikepins ausgebildeten Griffkanten in axialer Richtung bzw. in Umfangsrichtung orientiert sind.

Der Erfindung liegt die Aufgabe zugrunde, das Konzept der Verwendung von zwei unterschiedlich gestalteten Spiketypen im Laufstreifen eines Fahrzeugluftreifens zur weiteren Verbesserung der Handlingeigenschaften von Fahrzeugluftreifen auf eisigem Untergrund zu optimieren, vorzugsweise zur weiteren Verbesserung der Übertragung von Seitenkräften und zur weiteren Verbesserung der Übertragung von in Umfangsrichtung wirkenden Kräften, also Brems- und Traktionskräften.

Gelöst wird die gestellte Aufgabe erfindungsgemäß dadurch, dass jeweils in zumindest einer Spikespur in einem seitlichen Umfangsbereich und in zumindest einer Spikespur in einem zentralen Umfangsbereich sowohl Spikes des ersten Typs als auch Spikes des zweiten Typs positioniert sind.

Da gemäß der Erfindung zwei Spiketypen zumindest in einer Spikespur in jedem Seitenbereich als auch in zumindest einer Spikespur im zentralen Bereich positioniert sind, kann sichergestellt werden, dass während des Abrollens des Reifens in jedem sich zum Untergrund einstellenden "Footprint" in diesen Bereichen Spikes beider Typen vorhanden sind. Diese Maßnahme erlaubt eine Anordnung der Spikes, die eine zur Optimierung der Handlingeigenschaften des Fahrzeugreifens auf eisigem Untergrund gewährleistet. Die erfindungsgemäße Maßnahme erlaubt auch, die Anordnung der Spikes über den Reifenumfang in Hinblick auf das Abrollgeräusch besser als bisher zu gestalten, insbesondere auch besser, als dies bei der bekannten Lösung gemäß der FI 126308 B der Fall ist. Die Erfindung ermöglicht ferner eine gleichmäßigere Anordnung und Verteilung der Spikes der unterschiedlichen Spiketypen über die Laufstreifenbreite, was sich wiederum hinsichtlich der Haltbarkeit der Spikes insgesamt im Laufstreifen, hinsichtlich des Abriebes der Spikepins und hinsichtlich des Abriebes des Laufstreifens selbst positiv bemerkbar macht.

Sind können beispielsweise in diesen Spikespuren sowohl Spikes positioniert, die für eine gute Seitenführung sorgen, als auch solche Spikes vorhanden sein, die für eine gute

Übertragung von Brems- und Traktionskräften sorgen. Vorteilhaft ist bei dieser Ausführung vor allem, dass auch in den seitlichen Umfangsbereichen Spikes vorhanden sind, die für eine gute Übertragung von Brems- und Traktionskräften sorgen, da Traktions- und Bremskräfte ja auch in den Seitenbereichen des Laufstreifens wirken. Die Positionierung von Spikes im zentralen Umfangsbereich, die eine bessere Seitenkraftübertragung bewirken, ist vor allem für das Ansprechen bei kleinen Lenkwinkeln vorteilhaft, da diese Spikes in dieser Position die Lenkpräzision verbessern helfen.

Bei einer bevorzugten Ausführungsform der Erfindung sind in sämtlichen Spikespuren sowohl Spikes des ersten Typs als auch Spikes des zweiten Typs positioniert. Diese Ausführung eignet sich besonders gut für eine optimale Anordnung von zwei unterschiedlichen Spiketypen.

Bevorzugt weist der seitliche Umfangsbereich eine Breite von 10 % bis 20 % der Laufstreifenbreite auf und enthält vorzugsweise zumindest zwei Spikespuren. Der zentrale Umfangsbereich weist eine Breite von 30 % bis 40 % der Laufstreifenbreite auf und enthält vorzugsweise zumindest vier Spikespuren. Dabei ist in jedem dieser Umfangsbereiche jeweils zumindest eine der Spikespuren eine solche, in welcher sowohl Spikes des ersten Typs als auch Spikes des zweiten Typs positioniert sind. Im zentralen Umfangsbereich ist es von Vorteil, wenn in jeder Laufstreifenhälfte zumindest je eine Spikespur sowohl Spikes des ersten Typs als auch Spikes des zweiten Typs enthält.

Bevorzugt ist ferner eine Ausführung, bei der in den Spikespuren, in welchen sowohl Spikes des ersten Typs als auch Spikes des zweiten Typs positioniert sind, das Verhältnis der Anzahl der Spikes des ersten Typs zur Anzahl der Spikes des zweiten Typs 80:20 bis 20:80, insbesondere 40:60 bis 60:40, beträgt. So ist in diesen Spikespuren jeweils eine gewisse Mindestanzahl an Spikes des ersten Typs und Spikes des zweiten Typs enthalten, sodass sich die Vorteile dieser Kombination, wie oben erwähnt, gut bemerkbar machen können. Je nach der Ausgestaltung der Profilierung des Laufstreifens, je nach Reifentyp, auch je nach der Position des Reifens am Fahrzeug und auch je nach der technischen Ausführung des Fahrzeuges können bestimmte Verhältnisse der Anzahl der Spikes des ersten Typs zur Anzahl der Spikes des zweiten Typs besonders vorteilhaft sein. Aus diesem Grund ist es auch bevorzugt, wenn im Laufstreifen insgesamt das Verhältnis der Anzahl der Spikes des ersten Typs zur Anzahl der Spikes des zweiten Typs 80:20 bis 20:80, insbesondere 40:60 bis 60:40, beträgt.

Bei ausgeglichen gestalteten Laufstreifenprofilen, dies sind Laufstreifenprofile bei welchen ein im Wesentlichen ausgeglichenes Verhältnis der in Umfangsrichtung wirkenden Kanten zu den in Querrichtung wirkenden Kanten vorhanden ist, lässt sich eine besonderes deutliche Verbesserung der Handlingperformance auf eisigem Untergrund dadurch erzielen, dass die Spikes des jenes Typs, welche für eine gute Seitenkraftübertragung sorgen, über die Breite des Laufstreifens in einer "W-Verteilung" vorliegen, sodass die Anzahl dieser Spikes in Spikespuren, die in den seitlichen Umfangsbereichen verlaufen, sowie in Spikespuren, die im zentralen Umfangsbereich verlaufen, höher ist als in den Spikespuren zwischen diesen Umfangsbereichen.

In einem Laufstreifen eines Fahrzeugluftreifens können nun neben den Spikespuren, in welchen sich Spikes des ersten Typs und Spikes des zweiten Typs befinden, auch Spikespuren vorhanden sein, bei denen dies nicht der Fall ist. Je nach der Ausgestaltung der Laufstreifenprofilierung, der Positionierung der betreffenden Reifen am Fahrzeug, des Typs des betreffenden Fahrzeugreifens und dergleichen kann es nun besonders vorteilhaft sein, wenn in diesen Spikespuren entweder nur Spikes des ersten Typs oder nur Spikes des zweiten Typs verankert sind. Hierbei kann auch vorgesehen sein, dass in einem Laufstreifen Spikespuren vorhanden sind, die nur Spikes des ersten Typs und Spikespuren vorhanden sind, die nur Spikes des zweiten Typs enthalten. Darüber hinaus kann auch eine Ausführung besonders günstig sein, bei der Spikespuren vorgesehen sind, in welchen Spikes zumindest eines weiteren Typs positioniert sind. Solche Spikes weisen Spikepins auf, die sich in ihrer Ausgestaltung von den Spikepins von den Spikes des ersten Typs und von den Spikes des zweiten Typs unterscheiden.

Bei einer bevorzugten Ausführung sorgen Spikes des ersten Typs für eine bessere Seitenkraftübertragung als Spikes des zweiten Typs, Spikes des zweiten Typs sorgen für eine bessere Traktions- und Bremskraftübertragung als Spikes des ersten Typs. Für die erwünschten positiven Effekte auf die Seitenkraftübertragung und die Traktions- und Bremskraftübertragung sind bevorzugte Ausgestaltungen der Spikepins der Spikes des ersten Typs und der Spikes des zweiten Typs besonders vorteilhaft.

Bei einer dieser Ausgestaltungen weisen die Spikepins des Spikes des ersten Typs eine Querschnittsfläche auf, die sich von der Querschnittsfläche der Spikes des zweiten Typs größenmäßig unterscheidet.

In diesem Zusammenhang ist es auch vorteilhaft, wenn der Spikepin der Spikes des ersten Typs in Draufsicht länglich gestaltet ist und mit seiner Längserstreckung in axialer Richtung verlaufend im Laufstreifen verankert ist. Besonders vorteilhaft ist dabei eine Ausführung der Spikepins der Spikes des ersten Typs mit einer in Richtung seiner Längserstreckung verlaufenden Symmetrieebene, die auf der Oberfläche des Spikepins eine Symmetrielinie ist, welche in axialer Richtung des Laufstreifens oder unter einem Winkel, welcher bis zu 25°, insbesondere bis zu 10°, von der axialen Richtung des Laufstreifens abweicht, verläuft.

Für eine gute Seitenkraftübertragung der Spikes des ersten Typs ist es ferner vorteilhaft, wenn sein Spikepin bezüglich einer durch die Schwerpunktachse des Spikes und quer zur seiner Längserstreckung verlaufenden Ebene unterschiedlich große Querschnittsflächenteile aufweist, wobei der Spike derart im Laufstreifen positioniert ist, dass der größere Flächenteil dem näher zum Spike befindlichen Laufstreifenrand zugewandt ist.

Besonders günstig ist eine Ausführung des Spikepins des Spikes des für eine gute Traktions- und Bremskraftübertragung sorgenden zweiten Typs mit einer in Draufsicht länglichen Ausgestaltung, wobei der Spike derart im Laufstreifen verankert ist, dass er mit seiner Längserstreckung in axialer Richtung verläuft. Von seiner geometrischen Ausgestaltung ist es vorteilhaft, wenn der Spikepin des Spikes des zweiten Typs eine quer zu seiner Längserstreckung verlaufende Symmetrieebene aufweist, die auf der Oberfläche des Spikepins eine Symmetrielinie ist, welche in der Umfangsrichtung des Laufstreifens verläuft. Dabei kann der Spikepin des Spikes des zweiten Typs zwei Symmetrieebenen aufweisen, die zueinander unter einem rechten Winkel verlaufen, wobei eine der Symmetrieebenen in Umfangsrichtung verläuft. Es ist eine Vielzahl von Ausgestaltungsmöglichkeiten für den Spikepin des Spikes des zweiten Typs möglich, auch mit mehr als zwei Symmetrieebenen. Von Bedeutung ist, dass die gewählte Geometrie für eine gute Übertragung von Traktions- und Bremskräften sorgt.

Bei Fahrzeugluftreifen mit einem laufrichtungsgebunden ausgeführten Laufstreifen kann es für eine Übertragung der Traktions- und Bremskräfte besonders vorteilhaft sein, wenn der Spikepin des für eine gute Traktions- und Bremskraftübertragung sorgenden Spikes des zweiten Typs bezüglich einer durch die Schwerpunktachse des Spikes und in seiner Längserstreckung bzw. in axialer Richtung verlaufenden Ebene unterschiedlich große Querschnittsflächenteile aufweist, wobei der Spike derart im Laufstreifen positioniert ist, dass sich der kleinere Flächenteil in der Drehrichtung bei Vorwärtsfahrt befindet.

Weitere Merkmale, Vorteile und Einzelheiten der Erfindung werden nun anhand der Zeichnung, die Ausführungsbeispiele der Erfindung darstellt, näher beschrieben. Dabei zeigen
Fig. 1a bis 1c Ansichten einer Ausführungsvariante eines Spikes eines ersten Typs,
Fig. 2a bis 2c Ansichten einer Ausführungsvariante eines Spikes eines zweiten Typs und
Fig. 3 eine Draufsicht auf einen Umfangsabschnitt eines Laufstreifens eines Fahrzeugluftreifens mit einer Ausführungsvariante der Anordnung der beiden Spiketypen.

Die Erfindung befasst sich mit der Anordnung von Spikes unterschiedlicher Ausgestaltung im Laufstreifen eines Fahrzeugluftreifens sowie mit einer bevorzugten Ausgestaltung solcher Spikes. Einer der Spiketypen ist insbesondere hinsichtlich einer guten Seitenkraftübertragung ausgestaltet, ein anderer Spiketyp insbesondere hinsichtlich einer guten Übertragung von Brems- und Traktionskräften, wie nachfolgend näher beschrieben wird.

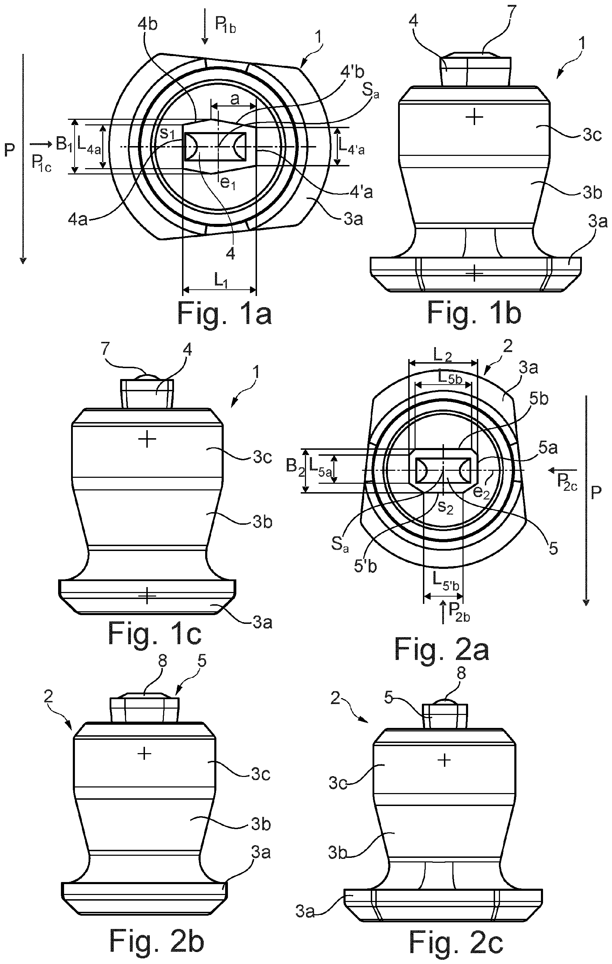

Fig. 1a bis 1c zeigen Ansichten einer bevorzugten Ausführungsform eines Spikes 1 eines ersten Typs. Fig. 1a ist eine Draufsicht auf den Spike, Fig. 1b und 1c sind jeweils Seitenansichten des Spikes, Fig. 1b gemäß dem Pfeil P_{1b} bei Fig. 1a und Fig. 1c gemäß dem Pfeil P_{1c} der Fig. 1a. Fig. 2a bis 2c zeigen Ansichten einer bevorzugten Ausführungsform eines Spikes 2 eines zweiten Typs, Fig. 2a eine Draufsicht, Fig. 2b und 2c Seitenansichten, Fig. 2b eine Seitenansicht des Spikes 2 gemäß dem Pfeil P_{2b} der Fig. 2a, Fig. 2c gemäß dem Pfeil P_{2c} der Fig. 2a.

Sowohl der Spike 1 als auch der Spike 2 bestehen beispielsweise in an sich bekannter Weise aus einem Spikekörper 3 und einem in diesem verankerten Spikepin, der Spike 1 weist einen Spikepin 4, der Spike 2 einen Spikepin 5 auf. Bei den dargestellten Ausführungsformen weisen die Spikes 1 und 2 übereinstimmend, beispielsweise in herkömmlicher Weise gestaltete und in herkömmlicher Weise ausgeführte Spikekörper 3 auf. Jeder Spikekörper 3 weist einen Fußflansch 3a, einen an diesen anschließenden taillierten Mittelteil 3b und einen an diesen anschließenden Oberflansch 3c auf. Bei der gezeigten Ausführung sind der Mittelteil 3b und der Oberflansch 3c rotationssymmetrisch gestaltete Teile, der Fußflansch 3a ist länglich gestaltet und somit unrund, wie es die Seitenansichten und die Draufsichten auf die Spikes 1 und 2 zeigen. Die unrunde Gestaltung des Fußflansches 3a der Spikes 1 und 2 gestattet es, die Spikes 1 und 2 in der zum Setzen verwendeten Spikepistole in einer bestimmten Orientierung zu transportieren und nachfolgend über die Spikepistole mit einer bevorzugten Orientierung, wie noch beschrieben wird, im Laufstreifen eines Fahrzeugluftreifens zu positionieren.

Der Spikepin 4 des Spikes 1 des ersten Typs und der Spikepin 5 des Spikes 2 des zweiten Typs sind in Draufsicht längliche Bauteile. Der Spikepin 4 weist eine größte Länge L₁ und eine größte Breite B₁ auf, mit L₁ > B₁, der Spikepin 5 weist eine größte Länge L₂ und eine größte Breite B₂ auf, mit L₂ > B₂. Der Spikepin 4 ist vorzugsweise derart im Spikekörper 3 verankert, dass die Richtung seiner längeren Erstreckung der Richtung der längeren Erstreckung des Fußflansches 3a entspricht. Der Spikepin 5 ist vorzugsweise derart im Spikekörper 3 verankert, dass er im rechten Winkel zur längeren Erstreckung des Fußflansches 3a orientiert ist. Sowohl der Spikepin 4 als auch der Spikepin 5 weisen an ihrer Oberseite eine winzige Erhebung, eine sogenannte Abriebschutzkuppel 7, 8, auf, die nicht Gegenstand der Erfindung ist und in üblicher Weise ausgeführt sein kann.

Der Spikepin 4 weist in Draufsicht die Gestalt von zwei an ihrer Basis zusammengefügten, unterschiedliche Höhen aufweisenden gleichschenkeligen Trapezen auf, wobei der Spikepin 4 an der gemeinsamen Basis der Trapeze die größte Breite B₁ aufweist. Der Spikepin 4 besitzt daher eine einzige Symmetrieebene, die in Fig. 1a durch die Linie si versinnbildlicht ist. Gegenüber der Schwerpunktachse des Spikes 1, welche durch den Punkt Sₐ gekennzeichnet ist, ist die Stelle mit der größten Breite B₁ in Fig. 1a nach links versetzt. An seinem äußeren Umfang weist der Spikepin 4 zwei parallel zueinander und senkrecht zu seiner Symmetrieebene verlaufende Griffkanten 4a, 4'a auf, wobei die der breitesten Stelle näher befindliche Griffkante 4a eine Länge L₄ₐ aufweist, die um 0,1 mm bis 0,3 mm größer ist als die Länge L_{4a'} der zweiten Griffkante 4'a. Die Breite B₁ an der breitesten Stelle ist um 0,1 mm bis 0,3 mm größer als die Länge L₄ₐ der längeren Griffkante 4a. Bevorzugte Abmessungen sind für die Griffkante 4'a 1,4 mm, für die Griffkante 4a 1,6 mm und für die Breite B₁ 2,0 mm. Die Länge L₁ ist um 30 % bis 40 % größer als die Breite B₁, ihre bevorzugte Größe ist 2,7 mm. Die beiden weiteren Griffkanten 4b, 4'b, die jeweils symmetrisch zur Symmetrieebene verlaufen, schließen miteinander einen stumpfen Winkel ein, wobei sich ihre Schnittstellen in einem Abstand a von 60 % der Länge Li von der Griffkante 4'a befinden. Bezüglich einer den Spikepin 4 senkrecht zur Symmetrieebene durch die Schwerpunktachse teilenden Ebene, die in Fig. 1a durch die Linie ei versinnbildlicht ist, weist der Spikepin 4 unterschiedlich große Querschnittsflächenteile auf, wobei der in Fig. 1a linke Teil der größere ist und der Spike 4 im Laufstreifen derart verankert wird, dass der größere Flächenteil dem näher zum Spike 4 befindlichen Laufstreifenrand zugewandt ist.

Der Spikepin 5 des Spikes 2 ist ebenfalls bezüglich einer einzigen relativ zum Spikekörper 3 senkrecht verlaufenden Symmetrieebene, welche in Fig. 2a durch die Linie S₂ in Fig. 2a versinnbildlicht ist, symmetrisch gestaltet. Die Symmetrieebene halbiert den Spikepin 5 senkrecht zu seiner Längserstreckung. Spikes 2 mit Spikepins 5 werden derart im Laufstreifen eines Fahrzeugluftreifens positioniert, dass ihre Symmetrieebene in oder im Wesentlichen in der Umfangsrichtung des Laufstreifens verläuft, mit ihrer längeren Erstreckung verlaufen sie daher in der axialen Richtung des Laufstreifens. Bei der gezeigten Ausführung ist der Spikepin 5 in Draufsicht nahezu rechteckig, wobei die Eckbereiche mit kurzen Kanten abgeschrägt sind. Der Spikepin 5 weist daher zwei parallel und symmetrisch zur Symmetrieebene verlaufende Griffkanten 5a auf, die gleich lang sind, ferner zwei bei der gezeigten Ausführung ebenfalls gerade verlaufende und im rechten Winkel zur Symmetrieebene orientierte Griffkanten 5b, 5'b auf. Die größte Länge L₂ ist durch den gegenseitigen Abstand der Griffkanten 5a bestimmt und ist um 0,1 mm bis 0,2 mm größer als die größte Länge L₁ des Spikepins 4. Die Länge L₂ beträgt beispielsweise 2,8 mm. Die größte Breite B₂ ist durch den gegenseitigen Abstand der Griffkanten 5b und 5'b bestimmt, wobei die Breite B₂ um 0,1 mm bis 0,3 mm kleiner ist als die Breite B₁ des Spikepins 4. Die Breite B₂ beträgt beispielsweise 1,8 mm. Die beiden Griffkanten 5a weisen eine Länge L₅ₐ auf, welche kleiner ist als die Längen L₄ₐ, L_{4'a} der Griffkanten 4a, 4'a des Spikepins 4, wobei die Differenz mindestens 0,2 mm und insbesondere bis zu 0,4 mm beträgt. Bei der gezeigten Ausführung weisen die Griffkanten 5b, 5'b unterschiedliche Längen L_{5b} und L_{5'b} auf, wobei die die Länge L_{5'b} der in Fig. 1a untere Griffkante 5'b um 0,5 mm bis 1,0 mm kleiner ist als die Länge L_{5b} der in Fig. 2a oberen Griffkante 5b. Ein Spikepin 5 mit einer derartigen Ausgestaltung ist dafür vorgesehen, in einem Laufstreifen mit einer drehrichtungsgebundenen Profilierung positioniert zu werden. Der Pfeil P in Fig. 1a und 2a versinnbildlicht die Drehrichtung eines solchen Reifens bei Vorwärtsfahrt, sodass zu erkennen ist, dass die kürzere Griffkante 5'b die sogenannte leading edge ist, also jene Kante, mit welcher der Spikepin 5 beim Abrollen des Reifens zuerst in den Untergrund eintritt. Bezüglich einer den Spikepin 5 senkrecht zur Symmetrieebene durch die Schwerpunktachse Sₐ des Spikes 2 teilenden Ebene e₂ weist der Spikepin 5 unterschiedlich große Querschnittsflächenteile auf, wobei der in Fig. 2a obere Teil der größere ist und die Griffkante 5b als Begrenzung enthält, die sogenannte trailing edge. Besonders bevorzugt ist ferner eine Ausführung der Spikpins 4 und 5, bei welcher die Spikepins 4 und 5 unterschiedlich große Querschnittsflächen aufweisen, wobei vorzugsweise der Spikepin 4 eine größere Querschnittsfläche aufweist als der Spikepin 5.

Bei einer für einen Laufstreifen mit einer nicht drehrichtungsgebundenen Profilierung abgewandelten Variante des Spikepins 5 werden die beiden Griffkanten 5b, 5'b gleich lang ausgeführt und der Spikepin 5 weist eine zweite Symmetrieebene, im rechten Winkel zur bereits erwähnten Symmetrieebene verlaufend, auf.

Wie bereits erwähnt werden Spikes 1 mit Spikepins 4 bevorzugt derart in den Laufstreifen eines Fahrzeugluftreifens eingesetzt, dass sie sich in axialer Richtung erstrecken, wobei vorzugsweise der größere Querschnittsflächenteil und vorzugsweise die längere Griffkante 4a jeweils dem näher liegenden Laufstreifenrand zugewandt sind. In Laufstreifen mit einer nicht drehrichtungsgebunden ausgeführten Profilierung ist es von Vorteil, wenn der Spikepin 4, wie beim gezeigten Ausführungsbeispiel, mit einer in Umfangsrichtung verlaufenden Griffkante dem näher liegenden Laufstreifenrand zugewandt ist. In einem drehrichtungsgebunden ausgeführten Profil erfolgt die Positionierung von Spikes 1 mit Spikepins 4 bevorzugt, derart dass die Symmetrielinie si des Spikepins 4 unter einem spitzen Winkel von bis zu 25°, insbesondere bis zu 10°, verläuft. Die Anordnung der Spikes 1 ist dabei derart, dass die Spikes 1 in der einen Laufstreifenhälfte gegenüber den Spikes 1 in der anderen Laufstreifenhälfte eine zueinander gegensinnige Neigung ihrer Symmetrielinien si aufweisen. Die Neigung der Symmetrielinien si relativ zur axialen Richtung ist dabei auch gegensinnig zur Neigung von die Laufrichtungsgebundenheit verursachenden Querrillen oder Schrägrillen der Profilierung des Laufstreifens.

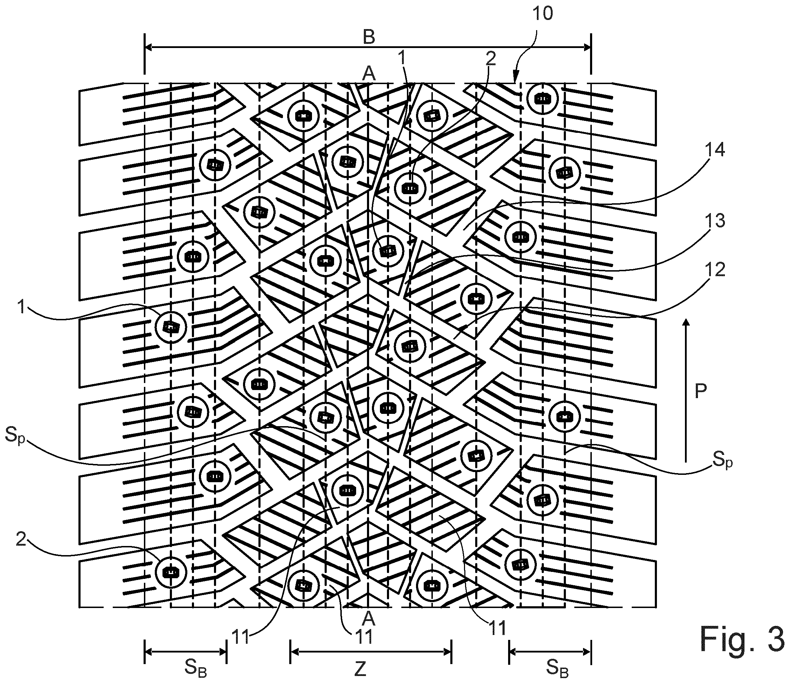

Fig. 3 zeigt einen Laufstreifen mit einem drehrichtungsgebundenen Profil. Dieser Laufstreifen ist insbesondere ein Laufstreifen für einen Fahrzeugluftreifen eines PKW-Reifens mit Winterfahreigenschaften. Der lediglich beispielhaft gezeigte Laufstreifen weist ein Profil mit zwei schulterseitigen Profilblockreihen 10 auf, zwischen welchen weitere Profilblöcke 11 ausgebildet sind, welche durch V-förmig über die Breite des Laufstreifens verlaufende Querrillen 12 und eine Anzahl von Umfangsrillen bzw. Schrägrillen 13, 14 gebildet sind. Die Drehrichtung bei Vorwärtsfahrt ist wiederum durch einen Pfeil P gekennzeichnet. Mit B ist die Breite des bodenberührenden Teils des Laufstreifens gekennzeichnet. B entspricht der Breite des statisch ermittelten Footprints des betreffenden Reifens bei einer Last von 70 % der maximalen Tragfähigkeit bei einem Innendruck von 85 %, ermittelt nach ETRTO Standards. Innerhalb der Breite B sind die Spikes 1 und 2 in sogenannten Spikespuren S_{P}, deren Anzahl üblicherweise zwischen 4 und 25, insbesondere 12 und 20, beträgt, angeordnet. Spikespuren S_{P} sind parallel zur Umfangsrichtung bzw. zum Reifenäquator A-A kreisförmig umlaufende Linien und in Fig. 3 als gestrichelte Linien versinnbildlicht. Bei der in Fig. 3 gezeigten Ausführung sind pro Laufstreifenhälfte sieben Spikespuren S_{P} vorgesehen, wobei die Anordnung der Spikespuren S_{P} bezüglich des Reifenäquators A-A symmetrisch erfolgt.

In einem zentralen Umfangsbereich Z des Laufstreifens, welcher symmetrisch zum Reifenäquator A-A über 30 % bis 40 % der Breite B verläuft, befinden sich bei der gezeigten Ausführung sechs Spikespuren S_{P}, in an den Laufstreifenrand anschließenden jeweils über 10 % bis 20 % der Breite B verlaufenden seitlichen Umfangsbereichen S_{B} befinden sich jeweils drei Spikespuren S_{P}. Der gegenseitige Abstand der Spikespuren S_{P} in den seitlichen Umfangsbereichen und der Spikespuren S_{P} im zentralen Umfangsbereich Z ist im Wesentlichen gleich groß. Jeweils eine einzelne Spikespur S_{P} befindet sich mittig zwischen den seitlichen Umfangsbereichen S_{B} und dem zentralen Bereich Z. Der Abstand dieser Spikespur S_{P} zu der jeweils benachbarten Spikespur Sp in einem der seitlichen Umfangsbereichen S_{B} und im zentralen Bereich Z ist größer als der gegenseitige Abstand der Spikespuren S_{P} im zentralen Bereich Z und in den seitlichen Umfangsbereichen S_{B}. Bei alternativen Ausführungen können jedoch die Spikespuren S_{P} zueinander andere Abstände als dargestellt, insbesondere zumindest im Wesentlichen gleich große Abstände, aufweisen. Die Gesamtanzahl der Spikes 1, 2 pro Spikespur S_{P} über den Umfang des Reifens beträgt 4 bis 25, insbesondere 7 bis 16.

In jedem seitlichen Umfangsbereich S_{B} und im zentralen Bereich Z ist jeweils zumindest eine Spikespur S_{P} vorhanden, in welcher sich sowohl Spikes 1 des ersten Typs als auch Spikes 2 des zweiten Typs befinden, bevorzugter Weise und wie dargestellt sind in allen Spikespuren S_{P} sowohl Spikes 1 des ersten Typs als auch Spikes 2 des zweiten Typs positioniert. In jenen Spikespuren S_{P}, in welchen sich nicht sowohl Spikes 1 des ersten Typs als auch Spikes 2 des zweiten Typs befinden, sind vorzugsweise entweder nur Spikes 1 des ersten Typs - beispielsweise in den weiteren Spikespuren S_{P} in den seitlichen Umfangsbereichen S_{B} - oder Spikes 2 des zweiten Typs - beispielsweise in den weiteren Spikespuren S_{P} im zentralen Umfangsbereich Z - verankert. In den Spikespuren S_{P}, in welchen sich nicht sowohl Spikes 1 des ersten Typs als auch Spikes 2 des zweiten Typs befinden können auch Spikes zumindest eines weiteren Typs vorgesehen werden, beispielsweise herkömmliche Spikes mit einem runden Spikepin. In jenen Spikespuren S_{P}, in welchen sich sowohl Spikes 1 des ersten Typs als auch Spikes 2 des zweiten Typs befinden, beträgt das Verhältnis der Anzahl der Spikes 1, die für Seitenführung und Seitenkraftübertragung von Vorteil sind, zur Anzahl der Spikes 2, die gute Brems- und Traktionseigenschaften sicherstellen, 80:20 bis 20:80, insbesondere 40:60 bis 60:40. Werden in sämtlichen Spikespuren S_{P} sowohl Spikes 1 des ersten Typs als auch Spikes 2 des zweiten Typs vorgesehen, so beträgt insgesamt das Verhältnis der Anzahl der Spikes des Typs 1 zur Anzahl der Spikes des Typs 2 80:20 bis 20:80, insbesondere 40:60 bis 60:40. Die Spikespuren S_{P} in den beiden seitlichen Umfangsbereichen S_{B} weisen vorzugsweise eine größere Anzahl von Spikes 1 des ersten Typs auf als jene im zentralen Umfangsbereich Z.

In hinsichtlich guter Traktions- und Bremseigenschaften ausgelegten Laufstreifen mit Profilen, bei welchen Querkanten durch Querrillen und in Querrichtung orientierte Einschnitte gegenüber Kanten von in Umfangsrichtung orientierten Rillen und Einschnitten überwiegen, ist es empfehlenswert, überhaupt einen relativ großen Anteil an Spikes des Typs 1 vorzusehen, insbesondere sollte das Verhältnis der Anzahl der Spikes des Typs 1 zur Anzahl der Spikes des Typs 2 größer als 50:50 sein. Derartige Laufstreifenprofile weisen meist Schwächen in der Seitenführung und Seitenkraftübertragung auf, die durch eine entsprechende Anzahl an Spikes des Typs 1 ausgeglichen werden können. Bei Reifen mit Laufstreifenprofilen, bei welchen Kanten von in Umfangsrichtung orientierten Rillen und Einschnitten gegenüber Querkanten durch Querrillen und in Querrichtung orientierte Einschnitte überwiegen, ist es empfehlenswert, dass das Verhältnis der Anzahl der Spikes 2 des zweiten Typs zur Anzahl der Spikes 1 des ersten Typs größer als 50:50 ist. Derartige Profile zeigen kaum Schwächen in der Seitenführung, gegebenenfalls jedoch Schwächen in der Übertragung von Brems- und Traktionskräften, die durch einen höheren Anteil der Spikes 2 des zweiten Typs ausgeglichen werden können.

Das in den Fig. 3 dargestellte Laufstreifenprofil weist eine im Wesentlichen ausgeglichene Profilstruktur auf, sodass sich für ein solches Profil ein Spikeverhältnis von 60:40 bis 40:60 empfiehlt. Des Weiteren sollte der Anteil an Spikes 1 in Laufstreifen von Reifen, die auf Fahrzeugen ohne elektronische Fahrassistenzsysteme verwendet werden, ebenfalls etwas größer sein als der Anteil an Spikes 2, insbesondere sollte das Verhältnis der Anzahl der Spikes 1 zur Anzahl der Spikes 2 zumindest 60:40 sein. An Fahrzeugen mit elektronischen Fahrassistenzsystemen empfiehlt sich eine Verwendung von Winterreifen mit Spikes im Laufstreifen, bei welchen der Anteil der Spikes 2 etwas höher ist als jener der Spikes 1.

Wie erläutert ist es daher sinnvoll, die Anteile der Spikes 1 und der Spikes 2 in den einzelnen Spikespuren S_{P} unterschiedlich zu wählen, in einigen Spikespuren S_{P} eine höhere Anzahl an Spikes 1 und in anderen Spikespuren S_{P} eine höhere Anzahl an Spikes 2 vorzusehen. Insbesondere bei "ausgeglichen" ausgelegten Laufstreifenprofilen lässt sich eine besonders deutliche Verbesserung der Handlingperformance auf eisigem Untergrund durch eine "W-Verteilung" der Spikes 1 erzielen. Das bedeutet, dass die Anzahl an Spikes 1 in Spikespuren S_{P}, die in den seitlichen Umfangsbereichen S_{B} verlaufen, sowie in Spikespuren S_{P}, die im zentralen Umfangsbereich Z verlaufen, höher ist, als in den Spikespuren S_{P} zwischen diesen Umfangsbereichen. Die Spikes 1 im zentralen Umfangsbereich Z sind vor allem für das Ansprechen bei kleinen Lenkwinkeln wichtig, da sie die Lenkpräzision verbessern helfen. In den seitlichen Umfangsbereichen S_{B} bewirkt eine höhere Anzahl an Spikes 1 eine optimale Seitenführung bei größeren Lenk- und Schräglaufwinkeln. Die für eine gute Traktion und ein gutes Bremsverhalten wichtigen Spikes 2 des zweiten Typs konzentrieren sich auf die Spikespur S_{P} bzw. Spikespuren S_{P} zwischen diesen Bereichen in jeder Laufstreifenhälfte, dort, wo die Länge des Footprints schon fast maximal ist und einen guten Spikeeingriff garantiert.

Die Erfindung ist auf die dargestellten Ausführungsbeispiele nicht eingeschränkt. So ist es insbesondere möglich, hinsichtlich Seitenführung und Seitenkraftübertragung optimierte Spikes sowie hinsichtlich Brems- und Traktionskraftübertragung optimierte Spikes mit Spikepins zu versehen, die auf andere Weise als dargestellt ausgestaltet sind. Dem Fachmann steht diesbezüglich eine Vielzahl von Möglichkeiten der Gestaltung der Spikes und ihrer Pins offen.

### Bezugszeichenliste

- 1, 2 ..................: Spike
- 3 ......................: Spikekörper
- 3a ....................: Fußflansch
- 3b ....................: Mittelteil
- 3c ....................: Oberflansch
- 4, 5 ..................: Spikepin
- 4a, 4'a ..............: Griffkante
- 4b, 4'b ..............: Griffkante
- 5 ......................: Spikepin
- 5a ....................: Griffkante
- 5b, 5'b..............: Griffkante
- 7, 8 ..................: Abriebschutzkuppel
- 10 ....................: Profilblockreihe
- 11 ....................: Profilblock
- 12 ....................: Querrille
- 13, 14 ..............: Rillen
- A-A .................: Reifenäquator
- a ......................: Abstand
- B, B₁, B₂..........: Breite
- e₁, e₂................: Linie (Ebene)
- L₁, L₂...............: Länge
- L₄ₐ, L_{4'a} ............: Länge
- L₅ₐ, L_{5b}, L_{5'b}......: Länge
- P_{1b}, P_{2b}.............: Pfeil
- P_{1c}, P_{2c}: Pfeil
- S₁, S₂ .................: Symmetrielinie
- S_{B} ....................: Seitenbereich
- S_{P} ....................: Spikespur
- Z......................: zentraler Bereich

## Patentansprüche

1. Fahrzeugluftreifen mit einem profilierten Laufstreifen mit Spikes (1, 2), welche in über den Umfang des Laufstreifens umlaufenden Spikespuren (S_{P}) angeordnet sind, wobei jeder Spike (1, 2) einen im Gummimaterial des Laufstreifens verankerten Spikekörper (3) und einen über die Laufstreifenperipherie vorstehenden Spikepin (4, 5) aufweist, wobei im Laufstreifen Spikes (1) eines ersten Typs und Spikes (2) eines zweiten Typs verankert sind, welche sich in der Ausgestaltung ihrer Spikepins (4, 5) voneinander unterscheiden, wobei die Spikes (1) des ersten Typs eine bessere Seitenkraftübertragung bewirken als die Spikes (2) des zweiten Typs, welche eine bessere Brems- und Traktionskraftübertragung bewirken als die Spikes (1) des ersten Typs,
**dadurch gekennzeichnet,**
**dass** jeweils in zumindest einer Spikespur (Sp) in einem seitlichen Umfangsbereich (S_{B}) und in zumindest einer Spikespur (S_{P}) in einem zentralen Umfangsbereich (Z) sowohl Spikes (1) des ersten Typs als auch Spikes (2) des zweiten Typs positioniert sind.

2. Fahrzeugluftreifen nach Anspruch 1, **dadurch gekennzeichnet, dass** in sämtlichen Spikespuren (S_{P}) sowohl Spikes (1) des ersten Typs als auch Spikes (2) des zweiten Typs positioniert sind.

3. Fahrzeugluftreifen nach Anspruch 1 oder 2, **dadurch gekennzeichnet, dass** der seitliche Umfangsbereich (S_{B}) eine Breite von 10% bis 20% der Laufstreifenbreite (B) aufweist und vorzugsweise zumindest zwei Spikespuren (S_{P}) enthält.

4. Fahrzeugluftreifen nach einem der Ansprüche 1 bis 3, **dadurch gekennzeichnet, dass** der zentrale Umfangsbereich (Z) eine Breite von 30% bis 40% der Laufstreifenbreite (B) aufweist und vorzugsweise zumindest vier Spikespuren (S_{P}) enthält.

5. Fahrzeugluftreifen nach einem der Ansprüche 1 bis 4, **dadurch gekennzeichnet, dass** in den Spikespuren (S_{P}), in welchen sowohl Spikes (1) des ersten Typs als auch Spikes (2) des zweiten Typs positioniert sind, das Verhältnis der Anzahl der Spikes (1) des ersten Typs zur Anzahl der Spikes (2) des zweiten Typs 80:20 bis 20:80, insbesondere 40:60 bis 60:40, beträgt.

6. Fahrzeugluftreifen nach einem der Ansprüche 1 bis 4, **dadurch gekennzeichnet, dass** im Laufstreifen insgesamt das Verhältnis der Anzahl der Spikes (1) des ersten Typs zur Anzahl der Spikes (2) des zweiten Typs 80:20 bis 20:80, insbesondere 40:60 bis 60:40, beträgt.

7. Fahrzeugluftreifen nach einem der Ansprüche 1 bis 6, **dadurch gekennzeichnet, dass** die Spikes (1) des ersten Typs über die Breite des Laufstreifens in einer "W-Verteilung" vorliegen, sodass die Anzahl dieser Spikes (1) in Spikespuren (S_{P}), die in den seitlichen Umfangsbereichen (S_{B}) verlaufen, sowie in Spikespuren (S_{P}), die im zentralen Umfangsbereich (Z) verlaufen, höher ist, als in den Spikespuren (S_{P}) zwischen diesen Umfangsbereichen (S_{B}, Z).

8. Fahrzeugluftreifen nach einem der Ansprüche 1 bis 7, **dadurch gekennzeichnet, dass** in Spikespuren (S_{P}), in welchen sich nicht sowohl Spikes (1) des ersten Typs als auch Spikes (2) des zweiten Typs befinden, entweder nur Spikes (1) des ersten Typs oder nur Spikes (2) des zweiten Typs verankert sind.

9. Fahrzeugluftreifen nach einem der Ansprüche 1 bis 8, **dadurch gekennzeichnet, dass** in Spikespuren (S_{P}), in welchen sich nicht sowohl Spikes (1) des ersten Typs als auch Spikes (2) des zweiten Typs befinden, Spikes zumindest eines weiteren Typs vorgesehen sind, die sich in der Ausgestaltung ihres Spikepins von den Spikepins (4, 5) der Spikes (1) des ersten Typs und der Spikes (2) des zweiten Typs unterscheiden.

10. Fahrzeugluftreifen nach einem der Ansprüche 1 bis 9, **dadurch gekennzeichnet, dass** die Spikepins (4, 5) der Spikes (1) des ersten Typs und der Spikes (2) des zweiten Typs Querschnittsflächen aufweisen, deren Größen sich voneinander unterscheiden.

11. Fahrzeugluftreifen einem der Ansprüche 1 bis 10, **dadurch gekennzeichnet, dass** der Spikepin (4) des Spikes (1) des ersten Typs in Draufsicht länglich gestaltet ist und mit seiner Längserstreckung in axialer Richtung oder unter einem Winkel von bis zu 25°, insbesondere bis zu 10°, zur axialen Richtung verlaufend im Laufstreifen verankert ist.

12. Fahrzeugluftreifen einem der Ansprüche 1 bis 11, **dadurch gekennzeichnet, dass** der Spikepin (4) des Spikes (1) des ersten Typs eine in Richtung seiner Längserstreckung verlaufende Symmetrieebene aufweist, die auf der Oberfläche des Spikepins (4) eine Symmetrielinie (s₁) ist, welche in axialer Richtung des Laufstreifens oder unter einem Winkel, welcher bis zu 25°, insbesondere bis zu 10°, von der axialen Richtung des Laufstreifens abweicht, verläuft.

13. Fahrzeugluftreifen einem der Ansprüche 1 bis 12, **dadurch gekennzeichnet, dass** der Spikepin (4) des Spikes (1) des ersten Typs bezüglich einer durch die Schwerpunktachse (Sₐ) des Spikes (1) und quer zu seiner Längserstreckung verlaufenden Ebene (e₁) unterschiedlich große Querschnittsflächenteile aufweist, wobei der Spike (1) derart im Laufstreifen positioniert ist, dass der größere Flächenteil dem näher zum Spike (1) befindlichen Laufstreifenrand zugewandt ist.

14. Fahrzeugluftreifen nach einem der Ansprüche 1 bis 8, **dadurch gekennzeichnet, dass** der Spikepin (5) des Spikes (2) des zweiten Typs in Draufsicht länglich gestaltet ist und mit seiner Längserstreckung in axialer Richtung verlaufend im Laufstreifen verankert ist.

15. Fahrzeugluftreifen nach einem der Ansprüche 1 bis 8 oder 14, **dadurch gekennzeichnet, dass** der Spikepin (5) des Spikes (2) des zweiten Typs eine quer seiner Längserstreckung verlaufende Symmetrieebene aufweist, die auf der Oberfläche des Spikepins (4) eine Symmetrielinie (s₂) ist, welche in der Umfangsrichtung des Laufstreifens verläuft.

16. Fahrzeugluftreifen nach einem der Ansprüche 1 bis 8, 14 oder 15, **dadurch gekennzeichnet, dass** der Spikepin (5) des Spikes (2) des zweiten Typs zwei Symmetrieebenen aufweist, die zueinander unter einem rechten Winkel verlaufen, wobei eine der Symmetrieebenen in Umfangsrichtung verläuft.

17. Fahrzeugluftreifen mit einem laufrichtungsgebunden ausgeführten Laufstreifen, nach einem der Ansprüche 1 bis 8 oder 14 bis 16, **gekennzeichnet dadurch, dass** der Spikepin (5) des Spikes (2) des zweiten Typs bezüglich einer durch die Schwerpunktachse des Spikes (2) und in seiner Längserstreckung bzw. in axialer Richtung verlaufenden Ebene (e₂) unterschiedlich große Querschnittsflächenteile aufweist, wobei der Spike (2) derart im Laufstreifen positioniert ist, dass sich der kleinere Flächenteil in der Drehrichtung bei Vorwärtsfahrt befindet.

## Claims

1. Pneumatic vehicle tyre having a profiled tread with spikes (1, 2), which are arranged in spike rows (Sp) running around the circumference of the tread, wherein each spike (1, 2) has a spike body (3) anchored in the rubber material of the tread and a spike pin (4, 5) protruding beyond the periphery of the tread, wherein spikes (1) of a first type and spikes (2) of a second type, which differ from one another in the design of their spike pins (4, 5), are anchored in the tread, wherein the spikes (1) of the first type bring about better lateral force transmission than the spikes (2) of the second type, which bring about better braking and tractive force transmission than the spikes (1) of the first type, **characterized in that**
both spikes (1) of the first type and spikes (2) of the second type are respectively positioned in at least one spike row (Sp) in a lateral circumferential region (S_{B}) and in at least one spike row (Sp) in a central circumferential region (Z).

2. Pneumatic vehicle tyre according to Claim 1, **characterized in that** both spikes (1) of the first type and spikes (2) of the second type are positioned in all of the spike rows (S_{P}) .

3. Pneumatic vehicle tyre according to Claim 1 or 2, **characterized in that** the lateral circumferential region (S_{B}) has a width of 10% to 20% of the tread width (B) and preferably contains at least two spike rows (S_{P}) .

4. Pneumatic vehicle tyre according to one of Claims 1 3, **characterized in that** the central circumferential region (Z) has a width of 30% to 40% of the tread width (B) and preferably contains at least four spike rows (S_{P}) .

5. Pneumatic vehicle tyre according to one of Claims 1 4, **characterized in that**, in the spike rows (S_{P}) in which both spikes (1) of the first type and spikes (2) of the second type are positioned, the ratio of the number of spikes (1) of the first type to the number of spikes (2) of the second type is 80:20 to 20:80, in particular 40:60 to 60:40.

6. Pneumatic vehicle tyre according to one of Claims 1 4, **characterized in that**, altogether in the tread, the ratio of the number of spikes (1) of the first type to the number of spikes (2) of the second type is 80:20 to 20:80, in particular 40:60 to 60:40.

7. Pneumatic vehicle tyre according to one of Claims 1 6, **characterized in that** the spikes (1) of the first type are in a "W distribution" over the width of the tread, so that the number of these spikes (1) in spike rows (Sp) that run in the lateral circumferential regions (S_{B}) and in spike rows (Sp) that run in the central circumferential region (Z) is greater than in the spike rows (Sp) between these circumferential regions (S_{B}, Z).

8. Pneumatic vehicle tyre according to one of Claims 1 7, **characterized in that**, in spike rows (S_{P}) in which there are not both spikes (1) of the first type and spikes (2) of the second type, either only spikes (1) of the first type or only spikes (2) of the second type are anchored.

9. Pneumatic vehicle tyre according to one of Claims 1 8, **characterized in that**, in spike rows (S_{P}) in which there are not both spikes (1) of the first type and spikes (2) of the second type, spikes of at least one further type are provided, differing in the design of their spike pins from the spike pins (4, 5) of the spikes (1) of the first type and the spikes (2) of the second type.

10. Pneumatic vehicle tyre according to one of Claims 1 9, **characterized in that** the spike pins (4, 5) of the spikes (1) of the first type and of the spikes (2) of the second type have cross-sectional areas of different sizes from one another.

11. Pneumatic vehicle tyre according to one of Claims 1 to 10, **characterized in that** the spike pin (4) of the spike (1) of the first type is of an elongated form in plan view and is anchored in the tread so as to run with its longitudinal extent in the axial direction or at an angle of up to 25°, in particular up to 10°, to the axial direction.

12. Pneumatic vehicle tyre according to one of Claims 1 to 11, **characterized in that** the spike pin (4) of the spike (1) of the first type has a plane of symmetry which runs in the direction of the longitudinal extent thereof and on the surface of the spike pin (4) is a line of symmetry (s₁), which runs in the axial direction of the tread or at an angle that deviates from the axial direction of the tread by up to 25°, in particular up to 10°.

13. Pneumatic vehicle tyre according to one of Claims 1 to 12, **characterized in that** the spike pin (4) of the spike (1) of the first type has cross-sectional area parts of different sizes with respect to a plane (e₁) running through the centroidal axis (Sₐ) of the spike (1) and transversely to the longitudinal extent thereof, wherein the spike (1) is positioned in the tread in such a way that the larger area part is facing the edge of the tread closer to the spike (1).

14. Pneumatic vehicle tyre according to one of Claims 1 to 8, **characterized in that** the spike pin (5) of the spike (2) of the second type is of an elongated form in plan view and is anchored in the tread so as to run with its longitudinal extent in the axial direction.

15. Pneumatic vehicle tyre according to one of Claims 1 8 or 14, **characterized in that** the spike pin (5) of the spike (2) of the second type has a plane of symmetry which runs transversely to the longitudinal extent thereof and on the surface of the spike pin (4) is a line of symmetry (S₂), which runs in the circumferential direction of the tread.

16. Pneumatic vehicle tyre according to one of Claims 1 8, 14 or 15, **characterized in that** the spike pin (5) of the spike (2) of the second type has two planes of symmetry, which run at a right angle in relation to one another, wherein one of the planes of symmetry runs in the circumferential direction.

17. Pneumatic vehicle tyre having a tread of a directional configuration, according to one of Claims 1 to 8 or 14 to 16, **characterized in that** the spike pin (5) of the spike (2) of the second type has cross-sectional area parts of different sizes with respect to a plane (e₂) running through the centroidal axis of the spike (2) and in the longitudinal extent thereof, wherein the spike (2) is positioned in the tread in such a way that the smaller area part is in the direction of rotation in forward travel.

## Revendications

1. Pneumatique de véhicule, comprenant une bande de roulement profilée dotée de crampons (1, 2) qui sont disposés dans des pistes de crampons (Sp) tournant autour de la circonférence de la bande de roulement, dans lequel chaque crampon (1, 2) présente un corps de crampon (3) ancré dans le matériau de caoutchouc de la bande de roulement et une pointe de crampon (4, 5) dépassant de la périphérie de bande de roulement, dans lequel, dans la bande de roulement, des crampons (1) d'un premier type et des crampons (2) d'un deuxième type sont ancrés qui se distinguent les uns des autres par la configuration de leurs pointes de crampon (4, 5), les crampons (1) du premier type provoquant une meilleure transmission de force latérale que les crampons (2) du deuxième type qui provoquent une meilleure transmission de force de freinage et de traction que les crampons (1) du premier type,
**caractérisé en ce que** respectivement dans au moins une piste de crampons (S_{P}), dans une zone circonférentielle latérale (S_{B}) et dans au moins une piste de crampons (S_{P}) dans une zone circonférentielle centrale (Z), à la fois des crampons (1) du premier type et des crampons (2) du deuxième type sont positionnés.

2. Pneumatique de véhicule selon la revendication 1, **caractérisé en ce que** dans toutes les pistes de crampons (S_{P}), à la fois des crampons (1) du premier type et des crampons (2) du deuxième type sont positionnés.

3. Pneumatique de véhicule selon la revendication 1 ou 2, **caractérisé en ce que** la zone circonférentielle latérale (S_{B}) présente une largeur de 10 % à 20 % de la largeur de bande de roulement (B), et contient de préférence au moins deux pistes de crampons (Sp).

4. Pneumatique de véhicule selon l'une quelconque des revendications 1 à 3, **caractérisé en ce que** la zone circonférentielle centrale (Z) présente une largeur de 30 % à 40 % de la largeur de bande de roulement (B), et contient de préférence au moins quatre pistes de crampons (S_{P}) .

5. Pneumatique de véhicule selon l'une quelconque des revendications 1 à 4, **caractérisé en ce que** dans les pistes de crampons (S_{P}), dans lesquelles à la fois des crampons (1) du premier type et des crampons (2) du deuxième type sont positionnés, le rapport du nombre des crampons (1) du premier type au nombre des crampons (2) du deuxième type est de 80:20 à 20:80, en particulier de 40:60 à 60:40.

6. Pneumatique de véhicule selon l'une quelconque des revendications 1 à 4, **caractérisé en ce que** dans la bande de roulement le rapport du nombre des crampons (1) du premier type au nombre des crampons (2) du deuxième type est globalement de 80:20 à 20:80, en particulier de 40:60 à 60:40.

7. Pneumatique de véhicule selon l'une quelconque des revendications 1 à 6, **caractérisé en ce que** les crampons (1) du premier type sont présents sur la largeur de la bande de roulement dans une répartition en forme de W de sorte que le nombre de ces crampons (1) dans les pistes de crampons (S_{P}) qui s'étendent dans les zones circonférentielles latérales (S_{B}), ainsi que dans les pistes de crampons (S_{P}) qui s'étendent dans la zone circonférentielle centrale (Z), est supérieur à celui dans les pistes de crampons (S_{P}) entre ces zones circonférentielles (S_{B}, Z) .

8. Pneumatique de véhicule selon l'une quelconque des revendications 1 à 7, **caractérisé en ce que** dans les pistes de crampons (S_{P}), dans lesquelles des crampons (1) du premier type et des crampons (2) du deuxième type ne sont pas présents à la fois, soit seuls des crampons (1) du premier type, soit seuls des crampons (2) du deuxième type sont ancrés.

9. Pneumatique de véhicule selon l'une quelconque des revendications 1 à 8, **caractérisé en ce que** dans les pistes de crampons (S_{P}), dans lesquelles des crampons (1) du premier type et des crampons (2) du deuxième type ne sont pas présents à la fois, des crampons au moins d'un autre type sont prévus qui se distinguent des crampons (1) du premier type et des crampons (2) du deuxième type par la configuration de leurs pointes de crampon (4, 5).

10. Pneumatique de véhicule selon l'une quelconque des revendications 1 à 9, **caractérisé en ce que** les pointes de crampon (4, 5) des crampons (1) du premier type et des crampons (2) du deuxième type présentent des superficies de la section dont les grandeurs sont différentes l'une de l'autre.

11. Pneumatique de véhicule selon l'une quelconque des revendications 1 à 10, **caractérisé en ce que** la pointe de crampon (4) des crampons (1) du premier type est de configuration allongée en vue de dessus, et est ancrée dans la bande de roulement en s'étendant par sa dimension longitudinale dans la direction axiale ou selon un angle jusqu'à 25°, en particulier jusqu'à 10°, par rapport à la direction axiale.

12. Pneumatique de véhicule selon l'une quelconque des revendications 1 à 11, **caractérisé en ce que** la pointe de crampon (4) des crampons (1) du premier type présente un plan de symétrie s'étendant dans la direction de sa dimension longitudinale et qui est une bissectrice (s₁), à la surface de la pointe de crampon (4), qui s'étend dans la direction axiale de la bande de roulement ou selon un angle qui dévie de jusqu'à 25°, en particulier de jusqu'à 10°, par rapport à la direction axiale de la bande de roulement.

13. Pneumatique de véhicule selon l'une quelconque des revendications 1 à 12, **caractérisé en ce que** la pointe de crampon (4) du crampon (1) du premier type présente des parties de superficie de la section de taille différente par rapport à un plan (e₁) passant par l'axe de gravité (Sₐ) du crampon (1) et s'étendant transversalement à sa dimension longitudinale, le crampon (1) étant positionné dans la bande de roulement de telle sorte que la partie de superficie plus grande est tournée vers le crampon (1) situé plus près du bord de bande de roulement.

14. Pneumatique de véhicule selon l'une quelconque des revendications 1 à 8, **caractérisé en ce que** la pointe de crampon (5) du crampon (2) du deuxième type est de configuration allongée en vue de dessus, et est ancrée dans la bande de roulement en s'étendant par sa dimension longitudinale dans la direction axiale.

15. Pneumatique de véhicule selon l'une quelconque des revendications 1 à 8 ou 14, **caractérisé en ce que** la pointe de crampon (5) du crampon (2) du deuxième type présente un plan de symétrie s'étendant transversalement à sa dimension longitudinale et qui est une bissectrice (s₂), à la surface de la pointe de crampon (4), qui s'étend dans la direction circonférentielle de la bande de roulement.

16. Pneumatique de véhicule selon l'une quelconque des revendications 1 à 8, 14 ou 15, **caractérisé en ce que** la pointe de crampon (5) du crampon (2) du deuxième type présente deux plans de symétrie qui s'étendent selon un angle droit l'un par rapport à l'autre, l'un des plans de symétrie s'étendant dans la direction circonférentielle.

17. Pneumatique de véhicule, comprenant une bande de roulement réalisée en tenant compte du sens de la marche selon l'une quelconque des revendications 1 à 8 ou 14 à 16, **caractérisé en ce que** la pointe de crampon (5) du crampon (2) du deuxième type présente des parties de superficie de section de taille différente par rapport à un plan (e₂) passant par l'axe de gravité du crampon (2) et s'étendant dans sa dimension longitudinale ou dans la direction axiale, le crampon (2) étant positionné dans la bande de roulement de telle sorte que la partie de superficie plus petite se trouve dans le sens de rotation en marche avant.
